(19) Europäisches Patentamt
European Patent Office
Office européen des brevets

(11) **EP 3 572 374 A1**

(12) **EUROPEAN PATENT APPLICATION**
published in accordance with Art. 153(4) EPC

(43) Date of publication:
**27.11.2019 Bulletin 2019/48**

(51) Int Cl.:
**C01B 25/455** *(2006.01)*

(21) Application number: **18741977.5**

(86) International application number:
**PCT/JP2018/001622**

(22) Date of filing: **19.01.2018**

(87) International publication number:
**WO 2018/135628 (26.07.2018 Gazette 2018/30)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(30) Priority: **20.01.2017 JP 2017008471**

(71) Applicant: **Mitsui Chemicals, Inc.**
**Minato-ku**
**Tokyo 105-7122 (JP)**

(72) Inventors:
• **GOTOU, Kenichi**
**Sodegaura-shi**
**Chiba 299-0265 (JP)**
• **SUZUKI, Makoto**
**Sodegaura-shi**
**Chiba 299-0265 (JP)**

(74) Representative: **J A Kemp LLP**
**14 South Square**
**Gray's Inn**
**London WC1R 5JJ (GB)**

(54) **METHOD FOR PRODUCING LITHIUM DIFLUOROPHOSPHATE**

(57) A method of producing lithium difluorophosphate includes: providing a crude product containing lithium difluorophosphate; obtaining a solution by dissolving the crude product in a mixed solvent in which at least one solvent (X) selected from the group consisting of ethyl acetate, acetone, dimethoxyethane, diethylene glycol dimethyl ether and triethylene glycol dimethyl ether, and at least one solvent (Y) selected from the group consisting of toluene, xylene, hexane, acetonitrile, dimethyl carbonate, ethyl methyl carbonate and diethyl carbonate, are mixed at a mass ratio (the solvent (X)/the solvent (Y)) in a range from 70/30 to 95/5; and extracting lithium difluorophosphate from the solution.

EP 3 572 374 A1

**Description**

Technical Field

The present disclosure relates to a method of producing lithium difluorophosphate.

Background Art

In recent years, lithium secondary batteries are widely used as electronic devices such as mobile phones or laptop computers, or as power supplies for electric vehicles or power storage. In particular, in recent years, the demand for high-capacity, high-power, high-energy density batteries that can be mounted on hybrid vehicles or electric vehicles is rapidly expanding.

A lithium secondary battery includes, for example, a positive electrode and a negative electrode containing a material capable of inserting and extracting lithium, and a battery nonaqueous electrolyte containing a lithium salt and a nonaqueous solvent.

As a positive electrode active material used for the positive electrode, for example, lithium metal oxides such as $LiCoO_2$, $LiMnO_2$, $LiNiO_2$, and $LiFePO_4$ are used.

As a negative electrode active material used for the negative electrode, for example, metallic lithium, metallic compounds capable of inserting and extracting lithium (metal alone, oxides, alloys with lithium, or the like), or carbon materials are known, and in particular, coke, artificial graphite, and natural graphite are in practical use.

In addition, as a battery nonaqueous electrolyte, solutions in which Li electrolytes such as $LiPF_6$, $LiBF_4$, $LiN(SO_2CF_3)_2$, or $LiN(SO_2CF_2CF_3)_2$ are mixed with mixed solvents of carbonates (nonaqueous solvents) such as ethylene carbonate, propylene carbonate, dimethyl carbonate, or ethyl methyl carbonate are used.

In order to improve the performance of a battery (for example, a lithium secondary battery) using a battery nonaqueous electrolyte, various additives are contained in the battery nonaqueous electrolyte.

For example, as a battery nonaqueous electrolyte that can improve the storage characteristics of the battery, there is known a battery nonaqueous electrolytic solution containing at least one of lithium monofluorophosphate or lithium difluorophosphate as an additive (see, for example, Patent Literature 1).

So far, various methods have been developed as methods of producing lithium difluorophosphate. For example, a method of reacting lithium hexafluorophosphate with silicon dioxide in a nonaqueous solvent (see, for example, Patent Literature 2) and a method of reacting lithium hexafluorophosphate with a compound having a Si-O-Si bond such as hexamethyldisiloxane (see, for example, Patent Literature 3) are disclosed.

In addition, as a method of producing lithium difluorophosphate, a method of reacting lithium hexafluorophosphate with lithium phosphate salt and phosphorus oxo acid anhydride is disclosed (see, for example, Patent Literature 4).

Patent Literature 1: Japanese Patent No. 3439085
Patent Literature 2: Japanese Patent No. 4604505
Patent Literature 3: Japanese Patent No. 5768801
Patent Literature 4: Japanese Patent Application Laid-Open (JP-A) No. 2015-209341

SUMMARY OF INVENTION

Technical Problem

However, in a method of producing lithium difluorophosphate, it may be required to further improve the ease of extracting lithium difluorophosphate from a solution in which a crude product is dissolved.

Therefore, an object of the present disclosure is to provide a method of producing lithium difluorophosphate which is easy to extract lithium difluorophosphate from a solution in which a crude product is dissolved.

Solution to Problem

As a result of intensive studies on the above problems, the present inventors have been found that when a crude product containing lithium difluorophosphate is dissolved in a mixed solvent mixed in a specific mass ratio, lithium difluorophosphate could be easily extracted from a solution in which the crude composition was dissolved, and have been completed the present invention.

That is, the following aspects are included in the means for solving the above-described objects.

<1> A method of producing lithium difluorophosphate, including:

providing a crude product containing lithium difluorophosphate;

obtaining a solution by dissolving the crude product in a mixed solvent in which at least one solvent (X) selected from the group consisting of ethyl acetate, acetone, dimethoxyethane, diethylene glycol dimethyl ether and triethylene glycol dimethyl ether, and at least one solvent (Y) selected from the group consisting of toluene, xylene, hexane, acetonitrile, dimethyl carbonate, ethyl methyl carbonate and diethyl carbonate, are mixed at a mass ratio (the solvent (X)/the solvent (Y)) in a range from 70/30 to 95/5; and

extracting lithium difluorophosphate from the solution.

<2> The method of producing lithium difluorophosphate according to <1>, wherein providing the crude product is producing the crude product by reacting lithium hexafluorophosphate with at least one selected from the group consisting of a phosphorus oxide (A) and a lithium salt of a phosphoric acid (B) according to the following reaction formula:

$$x(LiPF_6) + y(\text{phosphorus oxide (A)}) + z(\text{lithium salt of phosphoric acid (B)}) \rightarrow n(LiPO_2F_2),$$

wherein, in the reaction formula, x, y, z, and n represent stoichiometry coefficients, each of x and n independently represents an integer of 1 or more, and each of y and z independently represents an integer of 0 or 1 or more, and x, y, z, and n satisfy the following Formulae (1) to (4).

$$\text{Formula (1): } x + \text{number of Li atoms in (B)} \times z = n,$$

$$\text{Formula (2): } x + \text{number of P atoms in (A)} \times y + \text{number of P atoms in (B)} \times z = n,$$

$$\text{Formula (3): number of O atoms in (A)} \times y + \text{number of O atoms in (B)} \times z = 2n,$$

$$\text{Formula (4): } 6x = 2n$$

<3> The method of producing lithium difluorophosphate according to <1> or <2>, wherein providing the crude product is producing the crude product by reacting lithium hexafluorophosphate with at least one selected from the group consisting of lithium metaphosphate, trilithium phosphate, tetralithium pyrophosphate, pentalithium triphosphate, hexalithium tetraphosphate, and diphosphorus pentoxide.

<4> The method of producing lithium difluorophosphate according to any one of <1> to <3>, wherein providing the crude product is producing the crude product by reacting lithium hexafluorophosphate with a compound containing one selected from the group consisting of trilithium phosphate, tetralithium pyrophosphate, pentalithium triphosphate, and hexalithium tetraphosphate, and diphosphorus pentoxide.

<5> The method of producing lithium difluorophosphate according to any one of <1> to <4>, wherein providing the crude product is producing the crude product by reacting lithium hexafluorophosphate with trilithium phosphate and diphosphorus pentoxide.

<6> The method of producing lithium difluorophosphate according to any one of <1> to <3>, wherein providing the crude product is producing the crude product by reacting lithium hexafluorophosphate with lithium metaphosphate.

<7> The method of producing lithium difluorophosphate according to any one of <1> to <6>, wherein the solvent (X) contains at least one of ethyl acetate or dimethoxyethane, and the solvent (Y) contains at least one of toluene or dimethyl carbonate.

<8> The method of producing lithium difluorophosphate according to any one of <1> to <7>, wherein a combination of the solvent (X) and the solvent (Y) is a combination of ethyl acetate and toluene, a combination of ethyl acetate and dimethyl carbonate, a combination of dimethoxyethane and toluene, or a combination of dimethoxyethane and dimethyl carbonate.

<9> The method of producing lithium difluorophosphate according to any one of <1> to <8>, wherein the crude product further includes lithium monofluorophosphate and lithium fluoride.

Advantageous Effects of Invention

According to the present disclosure, there is provided a method of producing lithium difluorophosphate which facilitates extraction of lithium difluorophosphate from a solution in which a crude product is dissolved.

DESCRIPTION OF EMBODIMENTS

In the present specification, a numerical range represented using "to" means a range including numerical values described before and after "to" as the lower limit value and the upper limit value.

In the present specification, the term "step" is not only an independent step, but also a case where the intended purpose of the step is achieved even if it cannot be distinguished clearly from the other steps is included in the term.

[Method of producing lithium difluorophosphate]

The method of producing lithium difluorophosphate of the present disclosure (hereinafter also referred to as the "producing method of the present disclosure") includes: providing a crude product containing lithium difluorophosphate (hereinafter also simply referred to as a "crude product") (hereinafter also referred to as a "providing step"); obtaining a solution by dissolving the crude product in a mixed solvent in which at least one solvent (X) selected from the group consisting of ethyl acetate, acetone, dimethoxyethane, diethylene glycol dimethyl ether and triethylene glycol dimethyl ether, and at least one solvent (Y) selected from the group consisting of toluene, xylene, hexane, acetonitrile, dimethyl carbonate, ethyl methyl carbonate and diethyl carbonate, are mixed at a mass ratio (the solvent (X)/the solvent (Y)) in a range from 70/30 to 95/5 (hereinafter also referred to as a "dissolving step"); and extracting the lithium difluorophosphate from the solution (hereinafter also referred to as an "extracting step").

Hereinafter, the lithium difluorophosphate is also referred to as "$LiPO_2F_2$".

The solvent (X) is a good solvent for $LiPO_2F_2$, and the solvent (Y) is a poor solvent for $LiPO_2F_2$.

Therefore, in the dissolving step, $LiPO_2F_2$ is easily dissolved in the mixed solvent by setting the mass ratio (solvent (X)/solvent (Y) of the mixed solvent to 70/30 or more when dissolving the crude product. It is considered that the solvent (Y) is low in solubility of not only $LiPO_2F_2$ but also impurities contained in the crude product.

The dissolution of the impurities in the mixed solvent is suppressed by setting the mass ratio (solvent (X) and solvent (Y)) of the mixed solvent to 95/5 or less.

Therefore, according to the producing method of the present disclosure, it is easy to extract lithium difluorophosphate from the solution in which the crude product is dissolved. That is, according to the producing method of the present disclosure, high purity $LiPO_2F_2$ can be obtained from the solution in which the crude product is dissolved.

Hereinafter, each step of the producing method of the present disclosure is described.

<Providing Step>

The providing step is a step of providing a crude product containing $LiPO_2F_2$.

The providing step may be a step of simply providing an already produced crude product, or may be a step of producing a crude product.

Since the providing step may be a step of simply providing an already produced crude product, for example, in the case of producing a crude product at an A factory, transporting the produced crude product to a B factory different from the A factory, providing the transported crude product at the B factory in order to perform a dissolving step and extracting step, and performing the dissolving step and extracting step at the B factory, the action at the B factory is included within the scope of the producing method of the present disclosure.

The providing step is preferably a step of producing the crude product.

The crude product in the providing step may further contain, in addition to $LiPO_2F_2$, lithium monofluorophosphate (hereinafter also referred to as "$Li_2PO_3F$") and lithium fluoride (hereinafter also referred to as "LiF"). That is, the crude product may further contain $Li_2PO_3F$ and LiF.

According to the producing method of the present disclosure, by dissolving the crude product containing $LiPO_2F_2$ in the mixed solvent mixed at a specific mass ratio, $LiPO_2F_2$ is easily dissolved in the mixed solvent, and the impurities are easily precipitated, and are not dissolved in the mixed solvent. Therefore, the impurities such as $Li_2PO_3F$ and LiF are considered to be reduced in the crude product in the dissolving step.

In the producing method of the present disclosure, the providing step is preferably a step of producing the crude product by reacting lithium hexafluorophosphate with at least one selected from the group consisting of phosphorus oxide (A) and a lithium salt of a phosphoric acid (B) according to the following reaction formula.

Reaction formula: $x(LiPF_6)$ + y(phosphorus oxide (A)) +z(lithium salt of phosphoric acid (B)) $\rightarrow$ $n(LiPO_2F_2)$

(In the reaction formula, x, y, z, and n represent stoichiometry coefficients, each of x and n independently represents an integer of 1 or more, and each of y and z independently represents an integer of 0 or 1 or more. Further, x, y, z, and n satisfy the following Formulae (1) to (4).

$$\text{Formula (1): } x + \text{number of Li atoms in (B)} \times z = n$$

$$\text{Formula (2): } x + \text{number of P atoms in (A)} \times y + \text{number of P atoms in (B)} \times z = n$$

$$\text{Formula (3): number of O atoms in (A)} \times y + \text{number of O atoms in (B)} \times z = 2n$$

$$\text{Formula (4): } 6x = 2n)$$

In a case where the providing step is the step of producing the crude product, byproducts other than the main product $LiPO_2F_2$ are reduced in the reaction. That is, the waste of raw materials is reduced. Therefore, high purity $LiPO_2F_2$ is obtained in high yield.

As $LiPF_6$, a solid (for example, powder) produced by a conventionally known method can be used.

Examples of the phosphorus oxide (A) include diphosphorus pentoxide (hereinafter also referred to as "$P_2O_5$"). $P_2O_5$ includes tetraphosphate oxide ($P_4O_{10}$) as the same compound.

As $P_2O_5$, a solid (for example, powder) produced by a conventionally known method can be used.

Examples of the lithium salt of the phosphoric acid (B) include lithium metaphosphate (hereinafter also referred to as "$LiPO_3$"), trilithium phosphate (hereinafter also referred to as "$Li_3PO_4$"), tetralithium pyrophosphate (hereinafter also referred to as "$Li_4P_2O_7$"), pentalithium triphosphate (hereinafter also referred to as "$Li_5P_3O_{10}$"), and hexalithium tetraphosphate (hereinafter also referred to as "$Li_6P_4O_{13}$").

As the lithium salt of the phosphoric acid (B), a solid (for example, powder) produced by a conventionally known method can be used.

From the viewpoint of reducing by-products, the purity of the raw materials ($LiPF_6$, phosphorus oxide (A), and lithium salt of phosphoric acid (B)) is preferably high, but is not particularly limited. However, in the reaction according to the reaction formula, it is possible to permit a change in the molar number of the raw material (stoichiometric coefficient) according to the purity of the raw material.

In addition, in the reaction, it is possible to permit a change in the raw material molar ratio due to a measurement error and a weighing error of the purity of the raw material in the range which exhibits the effect of the present indication.

In the producing method of the present disclosure, the providing step is also preferable a step of producing a crude product containing $LiPO_2F_2$ by reacting at least one selected from the group consisting of lithium metaphosphate ($LiPO_3$), trilithium phosphate ($Li_3PO_4$), tetralithium pyrophosphate ($Li_4P_2O_7$), pentalithium triphosphate ($Li_5P_3O_{10}$), hexalithium tetraphosphate ($Li_6P_4O_{13}$), and diphosphorus pentoxide ($P_2O_5$) with lithium hexafluorophosphate ($LiPF_6$).

The case of this embodiment may not satisfy the reaction formula, but more preferably satisfies the reaction formula.

$P_2O_5$ corresponds to the phosphorus oxide (A), and $LiPO_3$, $Li_3PO_4$, $Li_4P_2O_7$, $Li_5P_3O_{10}$, and $Li_6P_4O_{13}$ correspond to the lithium salt of the phosphoric acid (B).

As the mode of the reaction, the following three modes are mentioned, for example. In aspects 1 and 2, the lithium salt of the phosphoric acid (B) other than $LiPO_3$ may be used alone or in combination of two or more kinds.

(Mode 1): Reaction of $LiPF_6$, $P_2O_5$, and the lithium salt of the phosphoric acid (B) other than $LiPO_3$
(Mode 2): Reaction of $LiPF_6$, $P_2O_5$, $LiPO_3$, and the lithium salt of the phosphoric acid (B) other than $LiPO_3$
(Mode 3): Reaction of $LiPF_6$ and $LiPO_3$

The providing step is more preferably the following providing steps A and B.

(Providing Step A)

The providing step A is a step of producing a crude product through the reaction of the aspects 1 and 2.

That is, the providing A is a step of producing the crude product by reacting lithium hexafluorophosphate ($LiPF_6$) with a compound including at least one selected from the group consisting of trilithium phosphate ($Li_3PO_4$), tetralithium pyrophosphate ($Li_4P_2O_7$), pentalithium triphosphate ($Li_5P_3O_{10}$), and hexalithium tetraphosphate ($Li_6P_4O_{13}$) and diphos-

phorus pentoxide ($P_2O_5$).

Particularly, the providing step A is preferably a step of producing the crude product by reacting lithium hexafluorophosphate ($LiPF_6$) with trilithium phosphate ($Li_3PO_4$) and diphosphorus pentoxide ($P_2O_5$).

Specifically, the providing step A is preferably a step of producing a crude product by the reaction of the following modes A1 to A3. Particularly, the providing step A may be more preferably a step of producing a crude product by the reaction of the aspect A1.

(Mode A1): $3LiPF_6 + 2P_2O_5 + 2Li_3PO_4 \rightarrow 9LiPO_2F_2$
(Mode A2): $2LiPF_6 + P_2O_5 + Li_4P_2O_7 \rightarrow 6LiPO_2F_2$
(Mode A3): $5LiPF_6 + 2P_2O_5 + 2Li_5P_3O_{10} \rightarrow 15LiPO_2F_2$
(Mode A4): $3LiPF_6 + P_2O_5 + Li_6P_4O_{13} \rightarrow 9LiPO_2F_2$

In the reactions of the aspects A1 to A4, at least one of lithium salt of phosphoric acid other than $Li_3PO_4$, lithium salt of phosphoric acid other than $Li_4P_2O_7$, lithium salt of phosphoric acid other than $Li_5P_3O_{10}$, or lithium salt of phosphoric acid other than $Li_6P_4O_{13}$ may be reacted.

(Providing Step B)

The providing step B is a step of producing a crude product through the reaction of the aspect 3.

That is, the providing step B is a step of producing the crude product by reacting lithium hexafluorophosphate ($LiPF_6$) with lithium metaphosphate ($LiPO_3$).

Specifically, the providing step B is preferably a step of producing the crude product by the reaction of the following mode B.

(Mode B): $LiPF_6 + 2LiPO_3 \rightarrow 3LiPO_2F_2$

In the producing method of the present disclosure, in a case where the providing step is a step of producing a crude product, the reaction in producing the crude product is preferably a solid phase reaction.

Specifically, it is preferable to mix each raw material (solid (preferably, powder)) in a solid state and perform heating to a desired temperature condition in a closed reaction system. The mixing of the raw material can be performed in advance through a generally used mixer, blender, mill, or the like. In the case of similar mixing, it is also possible to perform the reaction while mixing by using a reactor equipped with a stirring mechanism.

The reaction may be performed under normal pressure or under reduced pressure. However, from the viewpoint of obtaining high purity $LiPO_2F_2$ in high yield, it is preferable to perform the reaction in a closed reaction system from the start to the end of the reaction. In addition, in a case where the reaction is performed in the closed reaction system, the reaction may be performed in a state in which the inside of the reaction system is under an inert atmosphere such as nitrogen or argon or under reduced pressure.

In the producing method of the present disclosure, in a case where the providing step is the step of producing the crude product, a temperature (hereinafter also referred to as a "reaction temperature") in a case where $LiPF_6$ reacts with at least one selected from the group consisting of phosphorous oxide (A) and lithium salt of phosphoric acid (B) is preferably 100°C to 350°C, more preferably 150°C to 300°C, and further preferably 180°C to 250°C.

In a case where the reaction temperature is 100°C or more, the progress of the reaction is likely to be promoted.

In a case where the reaction temperature is 350°C or less, $LiPO_2F_2$ is difficult to be decomposed, and the formation of by-products is easily suppressed.

In the producing method of the present disclosure, in a case where the providing step is the step of producing the crude product, from the viewpoint of obtaining high purity $LiPO_2F_2$ in high yield, a time in a case where $LiPF_6$ reacts with at least one selected from the group consisting of phosphorous oxide (A) and lithium salt of phosphoric acid (B) is preferably 4 hours to 16 hours, more preferably 5 hours to 14 hours, and further preferably 6 hours to 12 hours.

<Dissolving Step>

In the producing method of the present disclosure, the dissolving step is a step of obtaining a solution by dissolving the crude product containing $LiPO_2F_2$ in a mixed solvent in which at least one solvent (X) selected from the group consisting of ethyl acetate, acetone, dimethoxyethane, diethylene glycol dimethyl ether and triethylene glycol dimethyl ether, and at least one solvent (Y) selected from the group consisting of toluene, xylene, hexane, acetonitrile, dimethyl carbonate, ethyl methyl carbonate and diethyl carbonate, are mixed at a mass ratio (solvent (X)/solvent (Y)) in a range of from 70/30 to 95/5.

In the producing method of the present disclosure, from the viewpoint of easily extracting $LiPO_2F_2$ from the solution in which the crude product is dissolved, the mixed solvent of the solvent (X) and the solvent (Y) is preferable such that the solvent (X) contains at least one of ethyl acetate or dimethoxyethane, and the solvent (Y) contains at least one of toluene or dimethyl carbonate.

As a combination of the solvent (X) and the solvent (Y), a combination of ethyl acetate and toluene, a combination of ethyl acetate and dimethyl carbonate, a combination of dimethoxyethane and toluene, or a combination of dimethoxyethane and dimethyl carbonate is preferred.

In the dissolving step, when dissolving in the mixed solvent of the solvent (X) and the solvent (Y), it is preferable to cool the crude product to 60°C or less (preferably 50°C or less) and inject or flow the crude product to the mixed solvent, and thereby the purity of the extracted $LiPO_2F_2$ tends to be increased.

The method of dissolving the crude product containing $LiPO_2F_2$ in the mixed solvent is not particularly limited, and a known method (a stirring method, an ultrasonic irradiation method, or the like) can be used.

<Extracting Step>

In the producing method of the present disclosure, the extracting step is a step of extracting $LiPO_2F_2$ from the solution obtained in the dissolving step. Therefore, the crude product ($LiPO_2F_2$ containing impurities) is purified, and high purity $LiPO_2F_2$ is extracted.

The method of extracting $LiPO_2F_2$ from the solution obtained in the dissolving step (the solution in which the crude product is dissolved in the mixed solvent), and a conventionally known method can be arbitrarily selected and performed. For example, there are a method of heating and concentrating the solution and distilling off the mixed solvent, a method of concentrating the solution under reduced pressure by using an evaporator and distilling off the mixed solvent, a method of filtering the solution (for example, filter filtration, filtration under reduced pressure, suction filtration), a method of precipitating $LiPO_2F_2$ by further adding a solvent other than the solvent (X) and the solvent (Y) to the solution, and the like. $LiPO_2F_2$ as a solid can be extracted by the above-described method.

As a method of drying $LiPO_2F_2$ extracted as a solid, a conventionally known method can be arbitrarily selected and performed. For example, there are a stationary drying method using a tray type drying machine, a fluid drying method using a conical dryer, a drying method using an apparatus such as a hot plate or an oven, a method of supplying warm air or hot air using a drying machine such as a dryer. Therefore, the removal of the residual solvent of extracted $LiPO_2F_2$ can be performed.

The above-described method of producing $LiPO_2F_2$ according to the present disclosure is particularly suitable for producing $LiPO_2F_2$ as an additive to be added to a nonaqueous electrolyte for a lithium ion battery (preferably a lithium ion secondary battery).

That is, since $LiPO_2F_2$ produced by the producing method of the present disclosure has high purity, it is expected to contribute to the improvement of the battery characteristics when $LiPO_2F_2$ is added to the nonaqueous electrolyte.

[Examples]

Hereinafter, examples of the present disclosure will be shown, but the present disclosure is not limited to the following examples.

In the following, "%" refers to "mass%" unless otherwise specified.

[Example 1]

A crude product containing $LiPO_2F_2$ was provided by the following method.

A 200-mL hermetically closed reaction container made from Hastelloy C equipped with a thermometer, a pressure gauge, and gas inlet and exhaust lines (hereinafter simply referred to as a "reaction container") was placed in a glove box purged with dry nitrogen gas, and powder of 5.0 g of lithium hexafluorophosphate, 3.1 g of diphosphorus pentoxide, and 2.5 g of trilithium phosphate were put in the reaction container in the box together with a stirring bar for a magnetic stirrer and sealed with a lid. The reaction container was taken off from the glove box, and stir mixing was performed at 300 rpm for 1 hour by the stirrer.

Next, the reaction container, in which the raw material was charged and mixed, was heated, and the reaction was performed at 200°C for 8 hours to obtain a crude product containing $LiPO_2F_2$ (that is, a providing step).

Next, the reaction container was cooled to room temperature (25°C), the inside of the reaction container was purged with nitrogen gas, the reaction container was put again into the glove box purged with dry nitrogen gas, and the lid of the reaction container was opened. 150 g of a mixed solvent of ethyl acetate as a solvent (X) and toluene as a solvent (Y) (ethyl acetate/toluene (mass ratio) = 95/5) prepared in advance was put thereto, and the reaction container was taken it out from the glove box after the lid was closed, and was stirred at 300 rpm for 1 hour with a stirrer while heating to 60°C to obtain a solution in which the crude product was dissolved (that is, a dissolving step).

After that, the lid of the reaction container was immediately opened, the solution in the reaction container (the solution in which the crude product was dissolved) was poured into a filtration device equipped with a filter, and a solvent insoluble solid (impurities) was filtered off by filtration under reduced pressure, and the solution was collected. The collected solution was concentrated by evaporating the solvent with an evaporator, the concentration was stopped when about 100 g of solvent was distilled off, and the obtained slurry was filtered at room temperature (25°C) to obtain a wet cake containing $LiPO_2F_2$ (that is, an extracting step). The wet cake was dried under reduced pressure at 50°C and 1,000 Pa or less to obtain 8.6 g of a solid by mass after drying.

The obtained solid was analyzed to determine the purity, which was 99.9% of lithium difluorophosphate ($LiPO_2F_2$) and 0.1% of the other components. The yield was 80.7% (see Table 1).

The purity and the yield of $LiPO_2F_2$ were determined as follows.

(Purity of $LiPO_2F_2$)

The obtained solid was dissolved in a heavy water solvent and $^{19}F$-NMR analysis was performed thereon. The purity of $LiPO_2F_2$ was calculated by the mass percentage method, based on the integral value of the obtained spectrum.

The attribution of the $^{19}F$-NMR spectrum is as follows.

$LiPF_6$: -71.4 ppm, -73.3 ppm (molecular weight: 151.9, number of F atoms: 6)
$Li_2PO_3F$: -75.0 ppm, -77.5 ppm (molecular weight: 111.9, number of F atoms: 1)
$LiPO_2F_2$: -81.0 ppm, -83.5 ppm (molecular weight: 107.9, number of F atoms: 2)
$LiF$: -120.0 ppm (molecular weight: 25.9, number of F atoms: 1)

The other components: The other peaks (it is assumed that the same molecular weight and number of F atom as $LiPF_6$)

From the spectrum obtained in the analysis, the mass fraction of each compound was obtained by the attribution and the following formula, and the mass fraction of $LiPO_2F_2$ was set as the purity.

$$\text{(integral value/number of F atoms of a compound to be subjected)} \times \text{(molecular weight of the compound)} = \text{(parts by mass of the compound)}$$

$$\text{(parts by mass of the compound)/(sum of parts by mass of all the detected compounds)} \times 100 = \text{mass fraction of the compound (\%)}$$

(Yield of $LiPO_2F_2$)

The mass of $LiPO_2F_2$ was obtained by multiplying the obtained mass of the solid by the purity calculated above. From the mass, the molar number of F atoms contained in $LiPO_2F_2$ was calculated, and this was set as Molar Number 1. Next, from the mass of $LiPF_6$ as the raw material, the molar number of F atoms contained in $LiPF_6$ was calculated, and this was set as Molar Number 2. The yield of $LiPO_2F_2$ was obtained as the ratio of the Molar Number 1 to the Molar Number 2 ((Molar Number 1/Molar Number 2) $\times$ 100). That is, the yield of $LiPO_2F_2$ was determined as the yield based on number of F atoms.

[Examples 2 and 3 and Comparative Example 1]

A solid was obtained in the same manner as in Example 1, except that the mass ratio of the mixed solvent (ethyl acetate/toluene) was changed according to Table 1, and the same measurement as in Example 1 was performed thereon. The results are shown in Table 1. In Table 1, "wt ratio" represents a mass ratio. Tables 2 to 4 are also the same.

[Example 2]

A solution in which a crude product was dissolved was obtained in the same manner as in Example 1, except that the mixed solvent in Example 1 was changed to a single solvent consisting of 150 g of ethyl acetate.

After that, the lid of the reaction container was immediately opened, the solution in the reaction container (the solution in which the crude product was dissolved) was poured into a filtration device equipped with a filter, and a solvent insoluble solid (impurities) was filtered off by filtration under reduced pressure, and the solution was collected. After the collected solution was cooled to room temperature (25°C), 120 g of toluene was added and mixed, and a solid was precipitated to obtain a slurry. The obtained slurry was filtered at room temperature (25°C) to obtain a wet cake containing $LiPO_2F_2$. The wet cake was dried under reduced pressure at 50°C and 1,000 Pa or less to obtain 9.0 g of a solid by mass after drying. The purity and the yield of $LiPO_2F_2$ were obtained in the same manner as in Example 1 by using the obtained solid. The results are shown in Table 1.

[Example 4]

A crude product containing $LiPO_2F_2$ was provided by the following method.

A 200-mL closed reaction container made from Hastelloy C equipped with a thermometer, a pressure gauge, and gas inlet and exhaust lines was placed in a glove box purged with dry nitrogen gas, and powder of 5.0 g of lithium hexafluorophosphate and 5.7 g of lithium metaphosphate were put in the reaction container in the box together with a stirring bar for a magnetic stirrer and sealed with a lid. The reaction container was taken off from the glove box, and stir mixing was performed for 1 hour at 300 rpm with the stirrer.

Next, the reaction container, in which the raw material was charged and mixed, was heated, and the reaction was performed at 200°C for 8 hours to obtain a crude product containing $LiPO_2F_2$ (that is, a providing step).

Next, the reaction container was cooled to room temperature (25°C), the inside of the reaction container was purged with nitrogen gas, the reaction container was put again into the glove box purged with dry nitrogen gas, and the lid of the reaction container was opened. 150 g of a mixed solvent of ethyl acetate as a solvent (X) and toluene as a solvent (Y) (ethyl acetate/toluene (mass ratio) = 95/5) prepared in advance was put thereto, the reaction container was taken out from the glove box after the lid was closed, and was stirred at 300 rpm for 1 hour while heating to 60°C to obtain a solution in which the crude product was dissolved (that is, a dissolving step).

After that, the lid of the reaction container was immediately opened, the solution in the reaction container (the solution in which the crude product was dissolved) was poured into a filtration device equipped with a filter, and a solvent insoluble solid (impurities) was filtered off by filtration under reduced pressure, and the solution was collected. The collected solution was concentrated by evaporating the solvent with an evaporator, the concentration was stopped when about 100 g of solvent was distilled off, and the obtained slurry was filtered at room temperature (25°C) to obtain a wet cake containing $LiPO_2F_2$ (that is, an extracting step). The wet cake was dried under reduced pressure at 50°C and 1,000 Pa or less to obtain 6.5 g of a solid by mass after drying. The purity and the yield of $LiPO_2F_2$ were determinedin the same manner as in Example 1 by using the obtained solid. The results are shown in Table 1.

[Examples 5 and 6 and Comparative Example 3]

A solid was obtained in the same manner as in Example 4, except that the mass ratio of the mixed solvent (ethyl acetate/toluene) was changed according to Table 1, and the same measurement as in Example 4 was performed thereon. The results are shown in Table 1.

[Comparative Example 4]

A solution in which a crude product was dissolved was obtained in the same manner as in Example 4, except that the mixed solvent in Example 4 was changed to a single solvent consisting of 150 g of ethyl acetate.

After that, the lid of the reaction container was immediately opened, the solution in the reaction container (the solution in which the crude product was dissolved) was poured into a filtration device equipped with a filter, and a solvent insoluble solid (impurities) was filtered off by filtration under reduced pressure, and the solution was collected. After the collected solution was cooled to room temperature (25°C), 120 g of toluene was added and mixed, and a solid was precipitated to obtain a slurry solution. The obtained slurry was filtered at room temperature (25°C) to obtain a wet cake containing $LiPO_2F_2$. The wet cake was dried under reduced pressure at 50°C and 1,000 Pa or less to obtain 6.9 g of a solid by mass after drying. The purity and the yield of $LiPO_2F_2$ were determined in the same manner as in Example 4 by using the obtained solid. The results are shown in Table 1.

[Table 1]

| | Reaction raw material (g/mol) | | | | Reaction condition | | Mixed solvent composition (wt ratio) | | Yield (g) | Yield (%) | Purity (%) [$^{19}$F-NMR] | | | |
|---|---|---|---|---|---|---|---|---|---|---|---|---|---|---|
| | LiPF$_6$ | P$_2$O$_5$ | Li$_3$PO$_4$ | LiPO$_3$ | Temperature (°C) | Time (h) | Ethyl acetate | toluene | | F atom yield | LiPO$_2$F$_2$ | Li$_2$PO$_3$F | LiF | Others |
| Example 1 | 5.0/0.033 | 3.1/0.022 | 2.5/0.022 | - | 200 | 8 | 95 | 5 | 8.6 | 80.7 | 99.9 | 0 | 0 | 0.1 |
| Example 2 | | | | | | | 90 | 10 | 8.9 | 83.5 | 99.9 | 0 | 0 | 0.1 |
| Example 3 | | | | | | | 70 | 30 | 8.4 | 78.8 | 99.9 | 0 | 0 | 0.1 |
| Comparative Example 1 | | | | | | | 60 | 40 | 2.5 | 23.5 | 99.9 | 0 | 0 | 0.1 |
| Comparative Example 2 | | | | | | | 100 | 0 | 9.0 | 84.5 | 95.2 | 3.5 | 0.6 | 0.7 |
| Example 4 | | - | - | 5.7/0.066 | | | 95 | 5 | 6.5 | 61.0 | 99.9 | 0 | 0 | 0.1 |
| Example 5 | | | | | | | 90 | 10 | 6.7 | 62.9 | 99.9 | 0 | 0 | 0.1 |
| Example 6 | | | | | | | 70 | 30 | 6.8 | 63.8 | 99.9 | 0 | 0 | 0.1 |
| Comparative Example 3 | | | | | | | 60 | 40 | 2.6 | 24.4 | 99.9 | 0 | 0 | 0.1 |
| Comparative Example 4 | | | | | | | 100 | 0 | 6.9 | 64.8 | 97.4 | 1.5 | 0.4 | 0.7 |

[Example 7]

A solid was obtained in the same manner as in Example 1, except that the mixed solvent of ethyl acetate and toluene in Example 1 was changed to a mixed solvent of ethyl acetate and dimethyl carbonate, and the same measurement as in Example 1 was performed thereon. The results are shown in Table 2.

[Examples 8 and 9 and Comparative Example 5]

A solid was obtained in the same manner as in Example 7, except that the mass ratio of the mixed solvent (ethyl acetate/dimethyl carbonate) was changed according to Table 2, and the same measurement as in Example 7 was performed thereon. The results are shown in Table 2.

[Example 10]

A solid was obtained in the same manner as in Example 4, except that the mixed solvent of ethyl acetate and toluene in Example 4 was changed to a mixed solvent of ethyl acetate and dimethyl carbonate, and the same measurement as in Example 4 was performed thereon. The results are shown in Table 2.

[Examples 11 and 12 and Comparative Example 6]

A solid was obtained in the same manner as in Example 10, except that the mass ratio of the mixed solvent (ethyl acetate/dimethyl carbonate) was changed according to Table 2, and the same measurement as in Example 10 was performed thereon. The results are shown in Table 2.

[Table 2]

| | Reaction raw material (g/mol) | | | | Reaction condition | | Mixed solvent composition (wt ratio) | | Yield (g) | Yield (%) | Purity (%) [$^{19}$F-NMR] | | | |
|---|---|---|---|---|---|---|---|---|---|---|---|---|---|---|
| | LiPF$_6$ | P$_2$O$_5$ | Li$_3$PO$_4$ | LiPO$_3$ | Temperature (°C) | Time (h) | Ethyl acetate | Dimethyl carbonate | | F atom yield | LiPO$_2$F$_2$ | Li$_2$PO$_3$F | LiF | Others |
| Example 7 | 5.0/0.033 | 3.1/0.022 | 2.5/0.022 | - | 200 | 8 | 95 | 5 | 8.7 | 81.7 | 99.9 | 0 | 0 | 0.1 |
| Example 8 | | | | | | | 90 | 10 | 8.7 | 81.7 | 99.9 | 0 | 0 | 0.1 |
| Example 9 | | | | | | | 70 | 30 | 8.6 | 80.7 | 99.9 | 0 | 0 | 0.1 |
| Comparative Example 5 | | | | | | | 60 | 40 | 5.1 | 47.9 | 99.9 | 0 | 0 | 0.1 |
| Example 10 | | - | - | 5.7/0.066 | | | 95 | 5 | 6.7 | 62.3 | 99.9 | 0 | 0 | 0.1 |
| Example 11 | | | | | | | 90 | 10 | 6.8 | 63.8 | 99.9 | 0 | 0 | 0.1 |
| Example 12 | | | | | | | 70 | 30 | 6.7 | 62.9 | 99.9 | 0 | 0 | 0.1 |
| Comparative Example 6 | | | | | | | 60 | 40 | 4.9 | 46.0 | 99.9 | 0 | 0 | 0.1 |

[Example 13]

A solid was obtained in the same manner as in Example 1, except that the mixed solvent of ethyl acetate and toluene in Example 1 was changed to a mixed solvent of dimethoxyethane and toluene, and the same measurement as in Example 1 was performed thereon. The results are shown in Table 3.

[Example 14 and Comparative Example 7]

A solid was obtained in the same manner as in Example 13, except that the mass ratio of the mixed solvent (dimethoxyethane/toluene) was changed according to Table 3, and the same measurement as in Example 13 was performed thereon. The results are shown in Table 3.

[Comparative Example 8]

A solid was obtained in the same manner as in Comparative Example 2, except that the single solvent consisting of ethyl acetate in Comparative Example 2 was changed to a single solvent consisting of dimethoxyethane, and the same measurement as in Comparative Example 2 was performed thereon. The results are shown in Table 3.

[Example 15]

A solid was obtained in the same manner as in Example 4, except that the mixed solvent of ethyl acetate and toluene in Example 4 was changed to a mixed solvent of dimethoxyethane and toluene, and the same measurement as in Example 4 was performed thereon. The results are shown in Table 3.

[Example 16 and Comparative Example 9]

A solid was obtained in the same manner as in Example 15, except that the mass ratio of the mixed solvent (dimethoxyethane/toluene) was changed according to Table 3, and the same measurement as in Example 15 was performed thereon. The results are shown in Table 3.

[Comparative Example 10]

A solid was obtained in the same manner as in Comparative Example 4, except that the single solvent consisting of ethyl acetate in Comparative Example 4 was changed to a single solvent consisting of dimethoxyethane, and the same measurement as in Comparative Example 4 was performed thereon. The results are shown in Table 3.

[Table 3]

| | Reaction raw material (g/mol) | | | | Reaction condition | | Mixed solvent composition (wt ratio) | | Yield (g) | Yield (%) | Purity (%) [$^{19}$F-NMR] | | | |
|---|---|---|---|---|---|---|---|---|---|---|---|---|---|---|
| | LiPF$_6$ | P$_2$O$_5$ | Li$_3$PO$_4$ | LiPO$_3$ | Temperature (°C) | Time (h) | Dimethoxyethane | toluene | | F atom yield | LiPO$_2$F$_2$ | Li$_2$PO$_3$F | LiF | Others |
| Example 13 | 5.0/0.033 | 3.1/0.022 | 2.5/0.022 | - | 200 | 8 | 95 | 5 | 8.1 | 76.0 | 99.9 | 0 | 0 | 0.1 |
| Example 14 | | | | | | | 70 | 30 | 7.8 | 73.2 | 99.9 | 0 | 0 | 0.1 |
| Comparative Example 7 | | | | | | | 60 | 40 | 2.1 | 19.7 | 99.9 | 0 | 0 | 0.1 |
| Comparative Example 8 | | | | | | | 100 | 0 | 8.6 | 80.7 | 95.5 | 3.1 | 0.8 | 0.6 |
| Example 15 | | - | - | 5.7/0.066 | | | 95 | 5 | 6.6 | 61.9 | 99.9 | 0 | 0 | 0.1 |
| Example 16 | | | | | | | 70 | 30 | 6.4 | 60.1 | 99.9 | 0 | 0 | 0.1 |
| Comparative Example 9 | | | | | | | 60 | 40 | 2.2 | 20.7 | 99.9 | 0 | 0 | 0.1 |
| Comparative Example 10 | | | | | | | 100 | 0 | 6.8 | 63.8 | 97.1 | 1.7 | 0.5 | 0.7 |

[Example 17]

A solid was obtained in the same manner as in Example 1, except that the mixed solvent of ethyl acetate and toluene in Example 1 was changed to a mixed solvent of dimethoxyethane and dimethyl carbonate, and the same measurement as in Example 1 was performed thereon. The results are shown in Table 4.

[Example 18 and Comparative Example 11]

A solid was obtained in the same manner as in Example 17, except that the mass ratio of the mixed solvent (dimethoxyethane/dimethyl carbonate) was changed according to Table 4, and the same measurement as in Example 17 was performed thereon. The results are shown in Table 4.

[Example 19]

A solid was obtained in the same manner as in Example 4, except that the mixed solvent of ethyl acetate and toluene in Example 4 was changed to a mixed solvent of dimethoxyethane and dimethyl carbonate, and the same measurement as in Example 4 was performed thereon. The results are shown in Table 4.

[Example 20 and Comparative Example 12]

A solid was obtained in the same manner as in Example 19, except that the mass ratio of the mixed solvent (dimethoxyethane/dimethyl carbonate) was changed according to Table 4, and the same measurement as in Example 19 was performed thereon. The results are shown in Table 4.

[Table 4]

| | Reaction raw material (g/mol) | | | | Reaction condition | | Mixed solvent composition (wt ratio) | | Yield (g) | Yield (%) | Purity (%) [$^{19}$F-NMR] | | | |
|---|---|---|---|---|---|---|---|---|---|---|---|---|---|---|
| | LiPF$_6$ | P$_2$O$_5$ | Li$_3$PO$_4$ | LiPO$_3$ | Temperature (°C) | Time (h) | Dimethoxyethane | Dimethyl carbonate | | F atom yield | LiPO$_2$F$_2$ | Li$_2$PO$_3$F | LiF | Others |
| Example 17 | 5.0/0.033 | 3.1/0.022 | 2.5/0.022 | - | 200 | 8 | 95 | 5 | 8.2 | 77.0 | 99.9 | 0 | 0 | 0.1 |
| Example 18 | | | | | | | 70 | 30 | 8.1 | 76.0 | 99.9 | 0 | 0 | 0.1 |
| Comparative Example 11 | | | | | | | 60 | 40 | 4.6 | 43.2 | 99.9 | 0 | 0 | 0.1 |
| Example 19 | | - | - | 5.7/0.066 | | | 95 | 5 | 6.6 | 61.9 | 99.9 | 0 | 0 | 0.1 |
| Example 20 | | | | | | | 70 | 30 | 6.5 | 61.0 | 99.9 | 0 | 0 | 0.1 |
| Comparative Example 12 | | | | | | | 60 | 40 | 4.0 | 37.5 | 99.9 | 0 | 0 | 0.1 |

As shown in Tables 1 to 4, when $LiPO_2F_2$ was extracted from the solution in which the crude product was dissolved, it can be seen that each example using the mixed solvent in which the mass ratio (solvent (X)/solvent (Y)) satisfies the range of from 70/30 to 95/5 could obtain high purity $LiPO_2F_2$, as compared with Comparative Examples 2, 4, 8, and 10 using the single solvent of the solvent (X) alone.

In addition, it can be seen that each example can obtain high yield and high purity of $LiPO_2F_2$, as compared with Comparative Examples 1, 3, 5 to 7, 9, 11, and 12 using the mixed solvents in which the mass ratio does not satisfy the range of from 70/30 to 95/5.

Therefore, when $LiPO_2F_2$ was extracted from the solution in which the crude product was dissolved, it can be seen that $LiPO_2F_2$ could be easily extracted by using the mixed solvent having the mass ratio (solvent (X)/solvent (Y)) in the above-described range.

The disclosure of Japanese Patent Application No. 2017-008471 is incorporated herein by reference in its entirety.

All the literatures, patent applications, and technical specifications described herein are incorporated herein by reference to the extent that the individual literatures, patent applications, and technical specifications are incorporated by reference and specifically and individually stated.

## Claims

1. A method of producing lithium difluorophosphate, comprising
   providing a crude product containing lithium difluorophosphate;
   obtaining a solution by dissolving the crude product in a mixed solvent in which at least one solvent (X) selected from the group consisting of ethyl acetate, acetone, dimethoxyethane, diethylene glycol dimethyl ether and triethylene glycol dimethyl ether, and at least one solvent (Y) selected from the group consisting of toluene, xylene, hexane, acetonitrile, dimethyl carbonate, ethyl methyl carbonate and diethyl carbonate, are mixed at a mass ratio (the solvent (X)/the solvent (Y)) in a range from 70/30 to 95/5; and
   extracting lithium difluorophosphate from the solution.

2. The method of producing lithium difluorophosphate according to claim 1, wherein providing the crude product is producing the crude product by reacting lithium hexafluorophosphate with at least one selected from the group consisting of phosphorus oxide (A) and a lithium salt of a phosphoric acid (B) according to the following reaction formula:

   $$x(LiPF_6) + y(\text{phosphorus oxide (A)}) + z(\text{lithium salt of phosphoric acid (B)}) \rightarrow n(LiPO_2F_2),$$

   wherein, in the reaction formula, x, y, z, and n represent stoichiometry coefficients, each of x and n independently represents an integer of 1 or more, and each of y and z independently represents an integer of 0 or 1 or more, and x, y, z, and n satisfy the following Formulae (1) to (4):

   $$\text{Formula (1): } x + \text{number of Li atoms in (B)} \times z = n,$$

   $$\text{Formula (2): } x + \text{number of P atoms in (A)} \times y + \text{number of P atoms in (B)} \times z = n,$$

   $$\text{Formula (3): number of O atoms in (A)} \times y + \text{number of O atoms in (B)} \times z = 2n,$$

   $$\text{Formula (4): } 6x = 2n.$$

3. The method of producing lithium difluorophosphate according to claim 1 or 2, wherein providing the crude product is producing the crude product by reacting lithium hexafluorophosphate with at least one selected from the group consisting of lithium metaphosphate, trilithium phosphate, tetralithium pyrophosphate, pentalithium triphosphate, hexalithium tetraphosphate and diphosphorus pentoxide.

4. The method of producing lithium difluorophosphate according to any one of claims 1 to 3, wherein providing the crude product is producing the crude product by reacting lithium hexafluorophosphate with a compound containing one selected from the group consisting of trilithium phosphate, tetralithium pyrophosphate, pentalithium triphosphate, and hexalithium tetraphosphate, and diphosphorus pentoxide.

5. The method of producing lithium difluorophosphate according to any one of claims 1 to 4, wherein providing the crude product is producing the crude product by reacting lithium hexafluorophosphate with trilithium phosphate and diphosphorus pentoxide.

6. The method of producing lithium difluorophosphate according to any one of claims 1 to 3, wherein providing the crude product is producing the crude product by reacting lithium hexafluorophosphate with lithium metaphosphate.

7. The method of producing lithium difluorophosphate according to any one of claims 1 to 6, wherein the solvent (X) comprises at least one of ethyl acetate or dimethoxyethane, and the solvent (Y) comprises at least one of toluene or dimethyl carbonate.

8. The method of producing lithium difluorophosphate according to any one of claims 1 to 7, wherein a combination of the solvent (X) and the solvent (Y) is a combination of ethyl acetate and toluene, a combination of ethyl acetate and dimethyl carbonate, a combination of dimethoxyethane and toluene, or a combination of dimethoxyethane and dimethyl carbonate.

9. The method of producing lithium difluorophosphate according to any one of claims 1 to 8, wherein the crude product further comprises lithium monofluorophosphate and lithium fluoride.

## INTERNATIONAL SEARCH REPORT

| International application No. |
|---|
| PCT/JP2018/001622 |

### A. CLASSIFICATION OF SUBJECT MATTER
Int.Cl. C01B25/455(2006.01)i

According to International Patent Classification (IPC) or to both national classification and IPC

### B. FIELDS SEARCHED
Minimum documentation searched (classification system followed by classification symbols)
Int.Cl. C01B25/455

Documentation searched other than minimum documentation to the extent that such documents are included in the fields searched

| | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)
JSTPlus/JST7580(JDreamIII)

### C. DOCUMENTS CONSIDERED TO BE RELEVANT

| Category* | Citation of document, with indication, where appropriate, of the relevant passages | Relevant to claim No. |
|---|---|---|
| A | JP 2014-528890 A (SOLVAY SA) 30 October 2014 & US 2014/0205916 A1 & WO 2013/023902 A1 & CN 103874657 A | 1-9 |
| A | JP 2013-539448 A (SOLVAY SA) 24 October 2013 & US 2013/0115522 A1 & WO 2012/004187 A2 & CN 102985362 A | 1-9 |
| A | JP 2013-534205 A (SOLVAY SA) 02 September 2013 & US 2013/0129595 A1 & WO 2012/016924 A1 & CN 103052592 A | 1-9 |

☒ Further documents are listed in the continuation of Box C.　　☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 11.04.2018 | 24.04.2018 |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**

International application No.

PCT/JP2018/001622

C (Continuation). DOCUMENTS CONSIDERED TO BE RELEVANT

| Category* | Citation of document, with indication, where appropriate, of the relevant passages | Relevant to claim No. |
|---|---|---|
| A | JP 2016-011220 A (DAIKIN INDUSTRIES, LTD.) 21 January 2016 (Family: none) | 1-9 |
| A | JP 2014-062036 A (KANTO DENKA KOGYO CO., LTD.) 10 April 2014 (Family: none) | 1-9 |

Form PCT/ISA/210 (continuation of second sheet) (January 2015)

**REFERENCES CITED IN THE DESCRIPTION**

**Patent documents cited in the description**

- JP 3439085 B
- JP 4604505 B
- JP 5768801 B
- JP 2015209341 A
- JP 2017008471 A